# EUROPÄISCHE PATENTSCHRIFT

(11) **EP 1 799 457 B1**
(45) Veröffentlichungstag und Bekanntmachung des Hinweises auf die Patenterteilung: **16.07.2008**
(21) Anmeldenummer: 05788654.1
(22) Anmeldetag: 30.09.2005
(51) Int. Cl.: B41F 13/20, B29C 43/22, B21B 31/10, B21D 5/08

(54) **VORRICHTUNG MIT MEHREREN WALZEN**
DEVICE WITH SEVERAL ROLLERS
DISPOSITIF COMPORTANT PLUSIEURS ROULEAUX

(30) Priorität: 30.09.2004 DE 202004015229 U
(43) Veröffentlichungstag der Anmeldung: 27.06.2007
(73) Patentinhaber: Kark AG, 21149 Hamburg (DE)
(72) Erfinder: KARK, Uwe, 21149 Hamburg (DE)
(74) Vertreter: Glawe, Delfs, Moll
(86) Internationale Anmeldenummer: PCT/EP2005/010607
(87) Internationale Veröffentlichungsnummer: WO 2006/034878

(56) Entgegenhaltungen:
- EP-A- 0 163 104
- EP-A- 0 693 329
- EP-A- 0 741 009
- DE-A1- 3 543 704
- DE-A1- 3 616 699
- DE-A1- 19 500 729
- DE-A1- 19 740 129
- US-A- 2 925 037
- US-A1- 2002 078 840

## Beschreibung

Die Erfindung betrifft eine Vorrichtung mit einem Gehäuse und mehreren Walzen, kreiszylinderförmigen Trommeln und dergleichen, deren Achsen parallel sind und die zwischen zwei Wänden gelagert sind, insbesondere zum Formen eines bei erhöhter Temperatur formbaren Bandes im Durchlauf auf der Oberfläche einer rotierenden Trommel. Die Walzen, Trommeln und dergleichen können dabei mit ihrer mitrotierenden Achse oder Welle zwischen den Wänden gelagert sein oder auf einer festen zwischen den Wänden angeordneten parallelen Achse, auf der sie rotieren.

Bei solchen Vorrichtungen ist es häufig erforderlich, die Walzen, Trommeln und dergleichen zu warten oder auszuwechseln. Dies ist insbesondere bei einer Vorrichtung zum Formen eines bei erhöhter Temperatur formbaren Bandes im Durchlauf auf der Oberfläche einer rotierenden Trommel erforderlich, die Gegenstand einer älteren Anmeldung PCT/EP 2004/004145 ist. Dort wird eine bei höherer Temperatur formbare Masse zwischen einer Trommel und einem Trägerband durch eine Walze gegen die Trommel gedrückt, um die bandförmig vorliegende Masse mit Einprägungen zu versehen, die denjenigen der Oberfläche der Trommel entsprechen. Anschließend wird die Masse dann gekühlt und mit den so erzeugten Einprägungen aus der Vorrichtung herausgeführt. Bei einer solchen Vorrichtung ist es z.B. erforderlich, wenn andere Einprägungen hergestellt werden sollen, die Trommel durch eine Trommel mit anderen Oberflächenmustern zu ersetzen. Das Band muss möglicherweise wegen Verschleiß ersetzt werden. Auch die Walze, die die Masse gegen die Trommel drückt, und weitere Umlenkwalzen, Kühlwalzen und dergleichen müssen unter Umständen ausgewechselt werden. Ähnliche Probleme stellen sich bei anderen Vorrichtungen, bei denen ebenfalls die Walzen, Trommeln und dergleichen zugänglich sein müssen, gewartet werden müssen, insbesondere wenn sie häufiger ausgewechselt werden müssen.

Es ist bekannt, nicht beide Wände, in denen die Walzen, Trommeln und dergleichen gelagert sind, als festen Teil des Gehäuses vorzusehen. Eine der Wände ist vielmehr aufschwenkbar. Diese Wand ist dabei mit einem Scharnier befestigt, das das Aufschwenken ermöglicht (DE 35 43 704 A1). Dabei tritt das Problem auf, dass die Lager in der Wand einen Kreisbogen beschreiben, während die Lager der Walzen, Trommeln und dergleichen nur ein Abziehen in Achsenrichtung erlauben.

Um dieses Problem zu lösen, ist es bekannt, die Wand zum Auswechseln von Walzen und dergleichen auf einem Wagen in Axialrichtung der Walzen zu verfahren und erst dann umzuklappen, wenn die Enden der Walzen beziehungsweise ihre Achsen freiliegen. Die Wand kann also zunächst in Achsenrichtung wegbewegt werden, bis die Walzen, Trommeln und dergleichen nicht mehr durch die in der Wand vorgesehenen Lager umgriffen werden. Anschließend kann dann die Wand aufgeschwenkt werden. Das Umklappen geschieht dabei mit Hilfe einer Kolben-Zylindereinheit, mit der die Wand während des Betriebs der Walzen und während des Heraus- und Hereinfahrens der Wand senkrecht zur axiale Richtung der Walzen gehalten werden soll (EP 0 693 329 A2). Dies ist aber durch die in der Nähe des Scharniers, um das das Umklappen der Wand stattfindet, angreifende Kolben-Zylindereinheit nicht exakt oder nur mit sehr großem mechanischen und elektronischen Steuerungsaufwand möglich.

Die Aufgabe der Erfindung besteht in der Schaffung einer Vorrichtung der eingangs genannten Art, die einfach aufgebaut ist und mit der sichergestellt ist, dass die bewegbare Wand exakt in Achsenrichtung von den Walzenenden oder Walzenachsen abgezogen oder auf diese aufgesetzt werden kann.

Die erfindungsgemäße Lösung besteht bei einer Vorrichtung mit einem Gehäuse und mehreren Walzen, kreiszylinderförmigen Trommeln und dergleichen, deren Achsen parallel sind und die zwischen zwei Wänden gelagert sind, insbesondere zum Formen eines bei erhöhter Temperatur formbaren Bandes im Durchlauf auf der Oberfläche einer rotierenden Trommel, wobei eine der Wände zum Freilegen der Walzen, Trommeln und dergleichen aufschwenkbar ist und mit einem oder mehreren Scharnieren an einem Bauelement befestigt ist, das parallel zu den Achsen verschiebbar ist, darin, dass auf der dem oder den Scharnieren gegenüberliegenden Seite der aufschwenkbaren Wand ein an der auf schwenkbaren Wand angreifendes, dieselbe festhaltendes oder freigebendes Verriegelungselement vorgesehen ist, das ebenfalls an einem parallel zu den Achsen verschiebbaren Bauelement angebracht ist.

Damit sich die Wand bei der linearen Bewegung der Bauelemente nicht verkantet, ist also an der den Scharnieren gegenüberliegenden Seite der Wand ein an der Wand angreifendes, dieselbe festhaltendes oder freigebendes Verriegelungselement vorgesehen, das ebenfalls an einem parallel zu den Achsen verschiebbaren Bauelement angebracht ist. Beide Bauelemente werden synchron angetrieben, so dass sichergestellt ist, dass die Wand genau in Achsenrichtung von den Walzen/Trommeln weg bewegt und beim Schließen auf dieselben wieder zu bewegt wird.

Zweckmäßigerweise sind die Bauelemente in Linearführungen mit Rollen- oder Kugellagern gelagert, was eine besonders genaue und doch leichtgängige Führung ergibt.

Zweckmäßigerweise sind die Bauelemente mit Hilfe von Motoren verschiebbar, die insbesondere mit elektronischen Mitteln so gesteuert sind, dass sich die Bauelemente auf beiden Seiten der herausschwenkbaren Wand mit derselben Geschwindigkeit bewegen. Besonders vorteilhaft sind dabei Schrittmotoren, mit denen die synchrone Verschiebung auf besonders einfache und zuverlässige Weise erreicht werden kann. Trotz des relativ unkomplizierten mechanischen Aufbaus wird also ein Verkanten zuverlässig verhindert.

Durch die Scharniere wird im geschlossenen Zustand an sich eine Bewegung der Wand in ihrer Ebene verhindert, durch die die Walzen/Trommeln verkanten würden. Noch sicherer ist die Lagerung aber, wenn die verschwenkbare Wand und das Gehäuse am Rand der durch diese Wand zu verschließenden Öffnung mit komplementären Führungselementen versehen sind, deren Führungsflächen parallel zu den Achsen sind. Bei einer besonders zweckmäßigen Ausführungsform sind die Führungselemente Zentrierbolzen und entsprechende Bohrungen. Sind nach Schließen der Wand die Zentrierbolzen in die Bohrungen eingeführt, so ist jegliche Bewegung der Wand quer zu den Achsen der Walzen/Trommeln verhindert.

Es versteht sich, dass die Linearführungen die Bauelemente nur so weit hinausbewegen müssen, dass die Wand die gelagerten Achsen der Walzen/Trommeln freigibt. Es versteht sich weiter, dass das Verriegelungselement ebenfalls verschwenkbar sein muss, um die verschwenkbare Wand freizugeben, wenn sie durch die linear geführten Bauelemente genügend weit von den Walzen/Trommeln entfernt ist.

Ist die verschwenkbare Wand geöffnet, so sind die Achsen, Walzen, Trommeln und dergleichen nur noch an der hinteren Wand gelagert. Damit die verschwenkbare Wand wieder geschlossen werden kann, obwohl die Achsen, Walzen oder Trommeln ein wenig durchhängen, sind die vorderen Enden der entsprechenden Achsen und die Lageröffnung in der verschwenkbaren Wand zweckmäßigerweise mit Einlaufschrägen versehen.

Zweckmäßigerweise sind zusätzlich besonders schwere Trommeln axial verspannt. Durch eine Zugspannung wird dabei der sich nicht mitdrehende Kern der Walze gegen eine Hülse gezogen, die sich an der Gehäusewand abstützt.

Bei einer Anwendungsform der vorliegenden Erfindung ist über die Trommeln, Walzen und dergleichen ein Stahlband geführt, das gespannt werden muss. In diesem Falle ist es vorteilhaft, wenn an beiden Wänden, in denen die entsprechende Achse oder Welle gelagert ist, eine Spanneinrichtung vorgesehen ist.

Die Erfindung wird im Folgenden anhand einer vorteilhaften Ausführungsform unter Bezugnahme auf die beigefügten Zeichnungen beschrieben. Es zeigen:
- Fig. 1: eine perspektivische Ansicht einer erfindungsgemäßen Vorrichtung;
- Fig. 2: in Draufsicht die linke Seite der Vorrichtung von Fig. 1 in der dort gezeigten Stellung;
- Fig. 3: die rechte Seite der Vorrichtung der Fig. 1 in Draufsicht in der in Fig. 1 gezeigten Stellung;
- Fig. 4-5: den Fig. 2 und 3 entsprechende Darstellungen, nachdem die verschwenkbare Wand verschwenkt ist;
- Fig. 6-7: Darstellungen, die den Fig. 2 und 3 entsprechen, nachdem die verschwenkbare Wand an das Gehäuse herangezogen ist;
- Fig. 8: die axiale Verspannung des Unterbaus der Trommel; und
- Fig. 9: die Vorrichtung der Erfindung mit einer Spannungseinrichtung für eine angetriebene Welle.

Die erfindungsgemäße Vorrichtung kann auf unterschiedlichen Gebieten verwendet werden. Eine, aber nicht die einzige Anwendung ist dabei die in der erwähnten PCT/EP 2004/004145 beschriebene. Diese Vorrichtung ist nur als ein Beispiel anzusehen; die Erfindung kann auch bei anderen Vorrichtungen mit mehreren Walzen, Trommeln und dergleichen Verwendung finden.

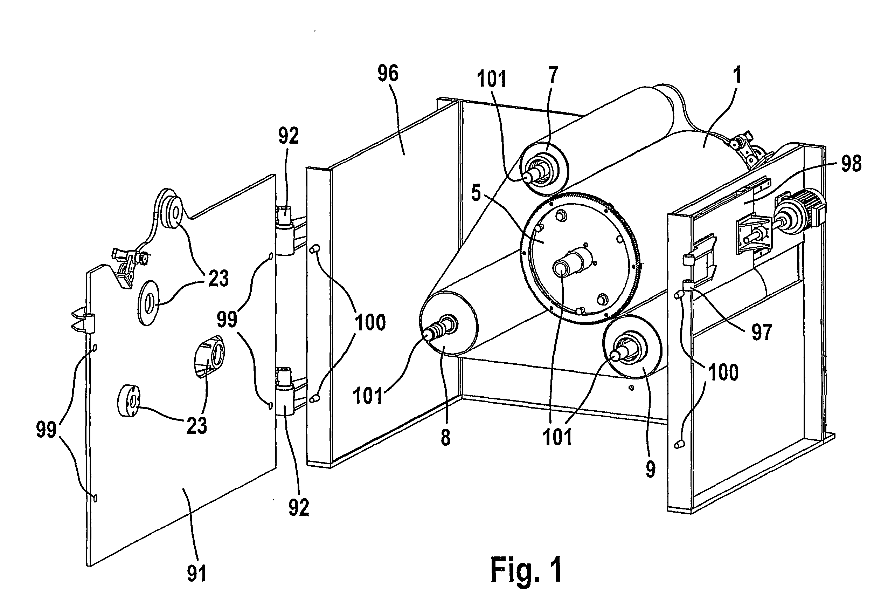

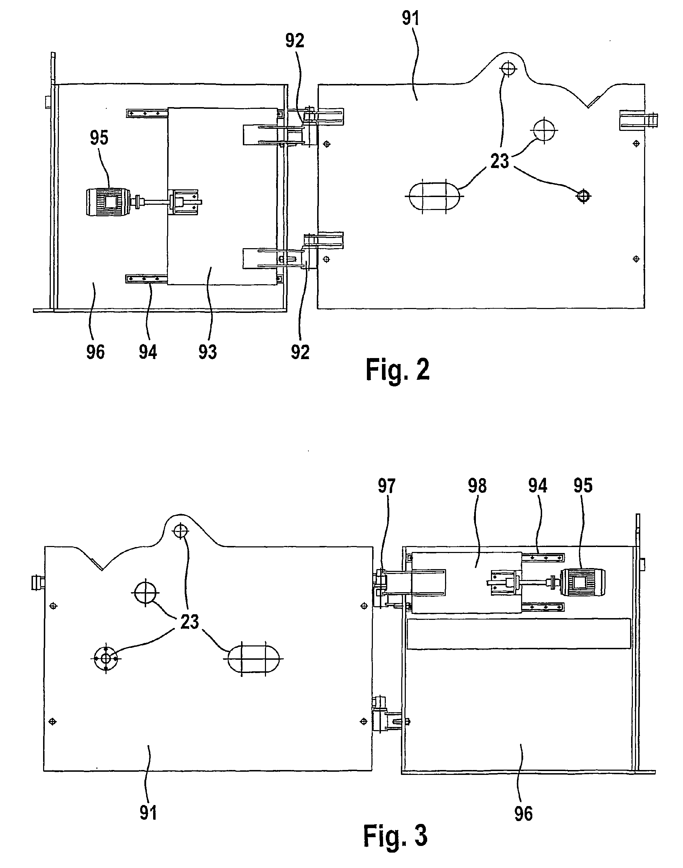

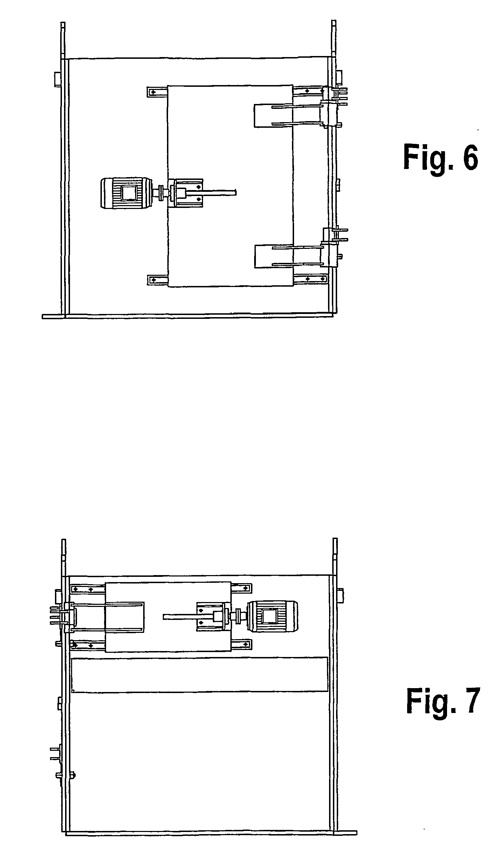

In Fig. 1 ist eine erfindungsgemäße Vorrichtung gezeigt. Die Achsen 101 einer Trommel 1 und von Walzen 7, 8 und 9 sind an dem zum Betrachter weisenden Ende in einer verschwenkbaren Wand 91 in Lagern 23 gelagert, wenn die verschwenkbare Wand 91 geschlossen ist. Sowohl die Enden der Achsen 101 als auch die Lager 23 sind mit Einlaufschrägen versehen, die ein Schließen der Wand 91 auch bei (geringem) Durchhängen der vorderen Enden der Achsen 101 ermöglichen. Die Wand 91 ist mit Hilfe von Scharnieren 92 schwenkbar angeordnet, so dass sie aus der in Fig. 1 gezeigten offenen Stellung in Richtung auf die Achsen 101 der Trommel 1 und der Walzen 7, 8, 9 verschwenkt werden kann. Die Scharniere 92 sind dabei an einem Bauelement 93 angeordnet, das in den Fig. 2, 4 und 6 gezeigt ist. Das Bauelement 93 ist auf Schienen 94 verschiebbar und kann durch einen Motor 95 bewegt werden. In der in Fig. 2 gezeigten Stellung weisen die Scharniere 92 deshalb einen Abstand vom Gehäuse 96 auf.

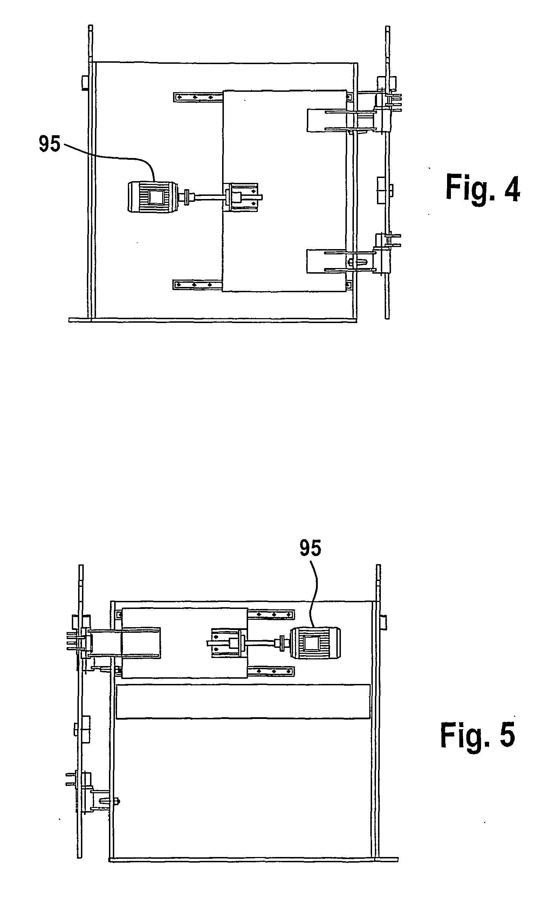

Wie dies aus den Fig. 1, 3, 5 und 7 ersichtlich ist, ist auf der den Scharnieren 92 gegenüberliegenden Seite ein Verschlusselement 97 angeordnet, das ebenfalls auf einem verschiebbaren Bauelement 98 angeordnet ist, das ebenfalls in Schienen 94 gelagert ist und mit einem Motor 95 verschoben werden kann. Ist die Wand 91 aus der in den Fig. 1, 2 und 3 gezeigten offenen Stellung um 90° verschwenkt, so nimmt sie die in den Fig. 4 und 5 gezeigte Stellung ein, in der sie senkrecht zu den Achsen der Trommel 1 und den Walzen 7, 8 und 9 steht, aber noch nicht verschlossen ist. Anschließend wird dann durch Betätigung der Motoren 95 die verschwenkbare Wand 91 gegen das Gehäuse 96 gezogen, wobei die Achsenden der Trommel 1 und der Walzen 7, 8 und 9 in die entsprechenden Lager 23 eingreifen. In der geschlossenen Stellung wird die verschwenkbare Wand 91 noch durch Zentrierbolzen 100 gesichert, die in Fig. 1 dargestellt sind. Diese greifen in entsprechende Bohrungen 99 der verschwenkbaren Wand 91 ein.

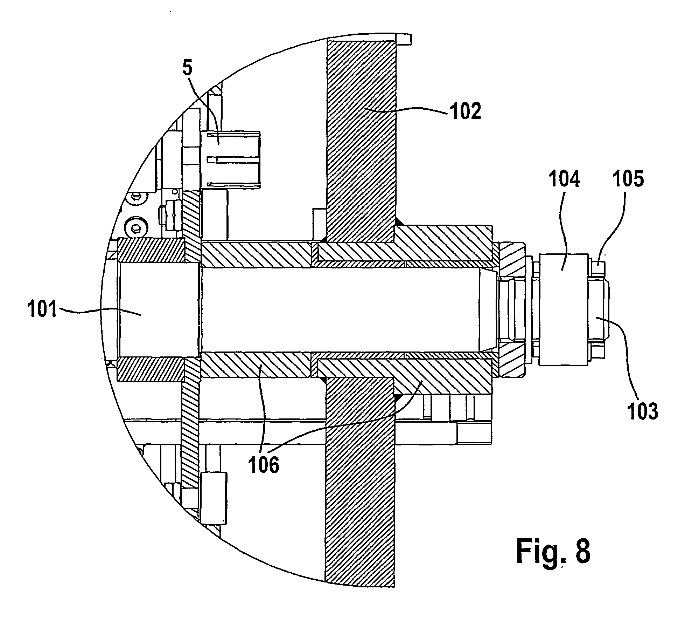

In Figur 8 ist die axiale Verspannung der Trommel 1 bzw. ihres Trägerkörpers 5 gezeigt, die erforderlich ist, wenn Trägerkörper 5 und Trommel 1 ein beträchtliches Gewicht von z.B. mehr als einer Tonne haben und daher die Gefahr groß ist, dass sie nach Öffnen der verschwenkbaren Wand durchhängen. In Figur 8 ist ausschnittweise der Trägerkörper 5 der Trommel 1 sowie die Achse 101 desselben gezeigt, die in der nicht verschwenkbaren Wand 102 gelagert ist. Das Ende der Achse 101 weist dabei einen mit Gewinde versehenen Endabschnitt 103 auf, auf den eine mit Innengewinde versehene Hülse oder Mutter 104 aufgeschraubt ist. In dieser Hülse oder Mutter 104 sind in Axialrichtung Gewindebohrungen vorgesehen, in die Schrauben 105 eingeschraubt sind, die sich über Zwischenelemente auf Hülsen 106 abstützen. Werden die Schrauben 105 angezogen, so wird die Achse 101 in Axialrichtung nach außen gespannt, so dass das Durchhängen vermieden oder zumindest doch so stark verringert wird, dass aufgrund der erwähnten Einlaufschrägen ein Schließen der verschwenkbaren Wand möglich ist.

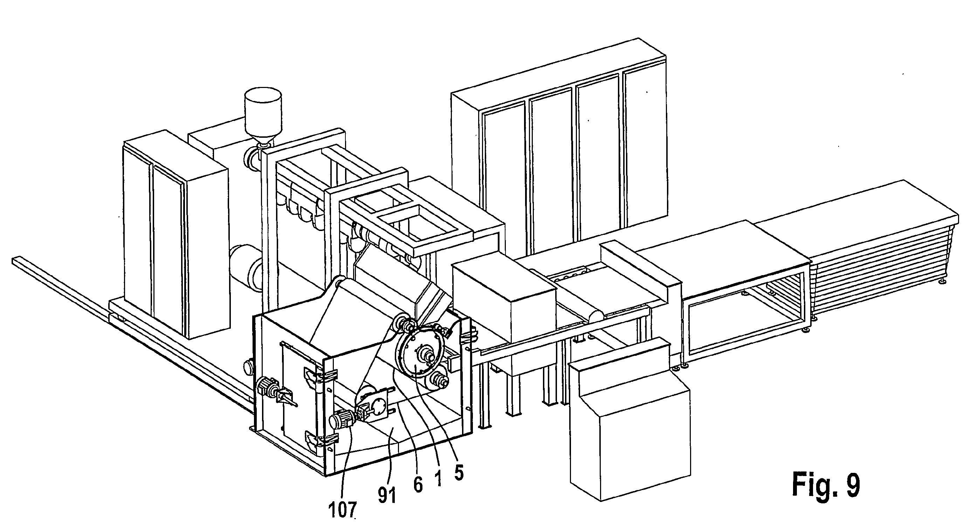

In Figur 9 ist eine Ausführungsform der Erfindung gezeigt, bei der eine Welle an ihren beiden Enden mit einer Spanneinrichtung 107 versehen ist, um ein umlaufendes Stahlband 6 zu spannen.

## Patentansprüche

1. Vorrichtung mit einem Gehäuse und mehreren Walzen, kreiszylinderförmigen Trommeln und dergleichen, deren Achsen parallel sind und die zwischen zwei Wänden gelagert sind, insbesondere zum Formen eines bei erhöhter Temperatur formbaren Bandes im Durchlauf auf der Oberfläche einer rotierenden Trommel, wobei eine der Wände (91) zum Freilegen der Walzen, Trommeln (1, 7 - 9) und dergleichen aufschwenkbar ist und mit einem oder mehreren Scharnieren (92) an einem Bauelement (93) befestigt ist, das parallel zu den Achsen verschiebbar ist, **dadurch gekennzeichnet, dass** auf der dem oder den Scharnieren gegenüberliegenden Seite der aufschwenkbaren Wand ein an der aufschwenkbaren Wand (91) angreifendes, dieselbe festhaltendes oder freigebendes Verriegelungselement (97) vorgesehen ist, das ebenfalls an einem parallel zu den Achsen verschiebbaren Bauelement (98) angebracht ist.

2. Vorrichtung nach Anspruch 1, **dadurch gekennzeichnet, dass** die Bauelemente (93, 98) in Linearführungen (94) mit Rollen- oder Kugellagern gelagert sind.

3. Vorrichtung nach Anspruch 1 oder 2, **dadurch gekennzeichnet, dass** die Bauelemente (93, 98) mit Hilfe von Motoren (95), insbesondere von Schrittmotoren verschiebbar sind.

4. Vorrichtung nach einem der Ansprüche 1 bis 3, **dadurch gekennzeichnet, dass** die verschwenkbare Wand (91) und das Gehäuse (96) am Rand der durch diese Wand zu verschließenden Öffnung mit komplementären Führungselementen (97, 99) versehen sind, deren Führungsflächen parallel zu den Achsen sind.

5. Vorrichtung nach Anspruch 5, **dadurch gekennzeichnet, dass** die Führungselemente Zentrierbolzen (97) und Bohrungen (99) sind.

6. Vorrichtung nach einem der Ansprüche 1 bis 5, **dadurch gekennzeichnet, dass** die Enden der Achsen (101) und die Lager (23) der verschwenkbaren Wand (91) mit Einlaufschrägen versehen sind.

7. Vorrichtung nach einem der Ansprüche 1 bis 6, **dadurch gekennzeichnet, dass** sie Einrichtungen (103, 104, 105, 106) zum axialen Verspannen mindestens einer Achse (101) aufweist.

8. Vorrichtung nach Anspruch 7, **dadurch gekennzeichnet, dass** die Einrichtungen zum axialen Verspannen der Achse (101) eine Gewindemutter (104) mit darin axial angeordneten Schrauben (105) und abstützende Hülsen (106) aufweist.

## Claims

1. A device with a housing and several rollers, circular-cylindrical drums and the like, the axles of which are parallel and which are mounted between two walls, in particular for shaping a band or strip, which can be shaped at elevated temperatures, as it passes through on the surface of a rotating drum, it being possible for one of the walls (91) to be pivoted open in order to expose the rollers, drums (1, 7 - 9) and the like, and one of the walls (91) being fastened by way of one or more hinges (92) to a component (93) which can be displaced parallel to the axles, **characterized in that** a locking element (97) is provided on that side of the pivotable wall which lies opposite the hinge(s), which locking element (97) acts on the pivotable wall (91), fixes or releases the latter and is likewise attached to a component (98) which can be displaced parallel to the axles.

2. The device as claimed in claim 1, **characterized in that** the components (93, 98) are mounted in linear guides (94) by way of roller or ball bearings.

3. The device as claimed in claim 1 or 2, **characterized in that** the components (93, 98) can be displaced with the aid of motors (95), in particular stepping motors.

4. The device as claimed in one of claims 1 to 3, **characterized in that** the pivotable wall (91) and the housing (96) are provided at the edge of the opening which is to be closed by this wall with complementary.

5. The device as claimed in claim 5, **characterized in that** the guide elements are centering pins (97) and holes (99).

6. The device as claimed in one of claims 1 to 5, **characterized in that** the ends of the axles (101) and the bearings (23) of the pivotable wall (91) are provided with entry bevels.

7. The device as claimed in one of claims 1 to 6, **characterized in that** it has devices (103, 104, 105, 106) for clamping at least one axle (101) axially.

8. The device as claimed in claim 7, **characterized in that** the devices for clamping the axle (101) axially have a threaded nut (104) with screws (105) which are arranged axially therein, and supporting sleeves (106).

## Revendications

1. Dispositif avec un boîtier et plusieurs rouleaux, des tambours cylindriques et analogues, dont les axes sont parallèles et sont montés entre deux parois, en particulier pour former une bande, formable à haute température, en parcourant la surface enveloppe d'un tambour en rotation, une des parois (91) pouvant basculer pour libérer de rouleau, le tambour (1, 7-9) et analogue, et étant fixée par une ou plusieurs charnières (92) sur un élément de structure (93) pouvant coulisser parallèlement aux axes, **caractérisé en ce que**, sur le côté de la paroi basculante opposé à la ou aux charnières, un élément de verrouillage (97) s'accrochant à la paroi basculante (91) et verrouillant ou libérant celle-ci est prévu, qui est également monté sur un élément de structure (98) pouvant coulisser parallèlement aux axes.

2. Dispositif selon la revendication 1, **caractérisé en ce que** les éléments de structure (93, 98) sont montés au moyen de roulements à galets ou à billes dans des éléments de guidage linéaires (94).

3. Dispositif selon la revendication 1 ou 2, **caractérisé en ce que** les éléments de structure (93, 98) coulissent au moyen de moteurs (95) notamment de moteurs pas-à-pas. la paroi basculante (91) et

4. Dispositif selon l'une des revendications 1 à 3, **caractérisé en ce que** la paroi basculante (91) et le boîtier (96) sont équipés, sur le bord de l'ouverture obturée par cette paroi, d'éléments de guidage complémentaires dont les surfaces de guidage sont parallèles aux axes.

5. Dispositif selon la revendication 4, **caractérisé en ce que** les éléments de guidage sont des boulons de centrage (97) et des trous (99).

6. Dispositif selon l'une des revendications 1 à 5, **caractérisé en ce que** les extrémités des axes (101) el les paliers (23) de la paroi basculante (91) sont pourvus de chanfreins d'introduction.

7. Dispositif selon l'une des revendications 1 à 6, **caractérisé en ce qu'**il présente des dispositifs (103, 104, 105, 106) pour le serrage axial d'au moins un axe (101).

8. Dispositif selon la revendication 1, **caractérisé en ce que** les dispositifs pour le serrage axial de l'axe (101) présentent un écrou taraudé (104) avec des vis (105) disposées à l'intérieur et des douilles d'appui (106).
